# EUROPEAN PATENT SPECIFICATION

(11) **EP 1 164 072 B1**
(45) Date of publication and mention of the grant of the patent: **03.01.2007**
(21) Application number: 01114327.8
(22) Date of filing: 13.06.2001
(51) Int. Cl.: B62D 25/12, B60R 21/34

(54) **Vehicular hood hinge structure**
Scharnierstruktur für Motorhaube
Structure de charnière pour capot de véhicule

(30) Priority: 15.06.2000 JP 2000179809; 23.06.2000 JP 2000189273; 12.10.2000 JP 2000311566
(43) Date of publication of application: 19.12.2001
(60) Divisional application: 06122620.5
(73) Proprietor: Toyota Jidosha Kabushiki Kaisha, Toyota-shi, Aichi-ken, 471-8571 (JP); Pacific Industrial Co., Ltd., Ogaki-shi, Gifu-ken 503-8603 (JP)
(72) Inventor: Matuyama, Narihide, Toyota-shi, Aichi-ken 471-8571 (JP); Hamada, Makoto, Toyota-shi, Aichi-ken 471-8571 (JP); Hosoya, Toshiaki, Toyota-shi, Aichi-ken 471-8571 (JP); Mori, Shinji, Ogaki-shi, Gifu-ken 503-8603 (JP)
(74) Representative: TBK-Patent

(56) References cited:
- PATENT ABSTRACTS OF JAPAN vol. 1999, no. 04, 30 April 1999 (1999-04-30) -& JP 11 020740 A (NISSAN MOTOR CO LTD), 26 January 1999 (1999-01-26)
- PATENT ABSTRACTS OF JAPAN vol. 2000, no. 04, 31 August 2000 (2000-08-31) -& JP 2000 006845 A (HONDA MOTOR CO LTD), 11 January 2000 (2000-01-11)
- PATENT ABSTRACTS OF JAPAN vol. 1998, no. 11, 30 September 1998 (1998-09-30) -& JP 10 152075 A (NISSAN MOTOR CO LTD), 9 June 1998 (1998-06-09)

## Description

### BACKGROUND OF THE INVENTION

### 1. Field of the Invention

The invention relates to a vehicular hood hinge structure and, more particularly, to a vehicular hood hinge structure for fitting a hood to a structural member of a vehicle such as an automobile or the like via hinge.

### 2. Description of Related Art

An example of a vehicular hood hinge structure for fitting a hood to a structural member of a vehicle such as an automobile or the like is disclosed in Japanese Patent Application Laid-Open No. HEI 11-99966.

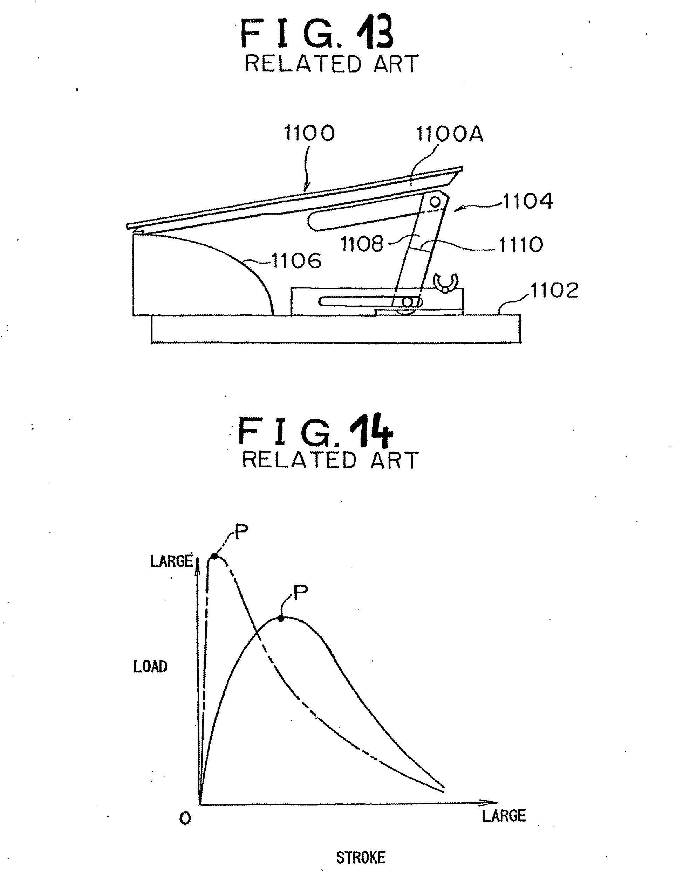

As shown in Fig. 13, in this vehicular hood hinge structure, a hood 1100 is fitted at its rear end portion 1100A to a structural member 1102 of a vehicle via a hood hinge 1104. If an obstacle detecting means disposed in a vehicle body has detected impact, the hood 1100 is displaced upwards by an actuator such as an air bag 1106 or the like so that the hood hinge 1104 assumes a state shown in Fig. 13. At this moment, a center hinge 1108 constituting a part of the hood hinge 1104 rises substantially vertically, thus restricting a height of the hood 1100. A bent portion 1110 that is bent in a thickness direction thereof is formed in the center hinge 1108 at its substantially longitudinally central portion. As a result, the bent portion 1110 is offset from rotational axis portions of the center hinge 1108 at its opposed ends, laterally with respect to the vehicle. Thus, if an impacting object has impacted a vehicle during its running state, the shock of secondary impact of the impacting object on an upper face of the hood 1100 is absorbed and damped by deformation of the center hinge 1108 around the bent portion 1110, and the impacting object is protected. That is, in comparison with a load characteristic curve (as indicated by an alternate long and two-dot chain line shown in Fig. 14) in the case where the bent portion 1110 is not formed, formation of the bent portion 1110 makes it possible to reduce a peak value P of the load characteristic curve as indicated by a solid line shown in Fig.14.

However, in this vehicular hood hinge structure, the effect of reducing a counterforce applied to the impacting object is obtained from a bending moment proportional to an amount of offset of the bent portion 1110 in the thickness direction. Therefore, if the amount of offset is increased, the peak value P of the load characteristic curve can be reduced as indicated by the solid line shown in Fig. 14. However, this known device requires the obstacle detecting means and the actuator to bring the center hinge in its operating position before the damping effect by deformation of the center hinge can be achieved. While, in a vehicle in which the hood is pivotably hinged in close proximity to the apron members, the center hinge 1108 must be considerably reduced in its longitudinal dimension, so that the amount of load that can be absorbed by the center hinge 1108 is strongly reduced. Thus, it is difficult that the load applied to the impacting object is reduced.

### SUMMARY OF THE INVENTION

It is an object of the invention to obtain a simple and compact vehicular hood hinge structure that can reduce a load applied to an impacting object impacting on the hood of the vehicle. This object is solved with a hood hinge according to claim 1.

According to a first aspect of the invention, there is provided a vehicular hood hinge structure wherein a rotation center of a hood is displaced laterally with respect to the vehicle following a predetermined load that is applied substantially from above. As a more concrete structure, it is possible to mention, as an example, a vehicular hood hinge structure having a hood hinge arm fitted to a hood and a base plate fitted to a vehicle body, wherein the hood hinge arm is rotatably pivoted on the base plate and wherein the base plate is provided with an origin portion where the base plate is deformed by a predetermined load applied from the hood in such a manner that a rotation center for the hood on the base plate is displaced laterally with respect to the vehicle. In other words, the base plate is bent sideways towards the longitudinal vehicle axis around the origin portion.

In this structure, the base plate is deformed laterally with respect to the vehicle around the origin portion that is provided on the base plate, by a load of a predetermined value or more applied from the hood. Accordingly, the hood becomes likely to be deformed laterally with respect to the vehicle. As a result, in comparison with a case where the hood itself is deformed longitudinally or vertically with respect to the vehicle, i.e., in a direction in which the hood is relatively unlikely to be deformed, deformation load can be reduced, when the hood is deformed and/or displaced laterally with respect to the vehicle as in the invention. Because there is no need to form two or more origin portions for deformation on the base plate, a decrease in rigidity of the entire hood hinge can be restrained.

A lateral distance between the base plate and a fitting portion for fitting the hood hinge arm to the hood may be made longer than a vertical distance between the origin portion and the rotation center of the hood hinge arm.

In this case, by making the lateral distance between the base plate and the fitting portion for fitting the hood hinge arm to the hood longer than the vertical distance between the origin portion and the rotation center of the hood hinge arm, the hood can be greatly deformed downwards due to a slight lateral change in angle of a rotation center axis of the hood hinge arm. As a result, the load applied to the impacting object can be lowered with a simple structure.

The ratio of the lateral distance between the base plate and the fitting portion for fitting the hood hinge arm to the hood to the vertical distance between the origin portion and the rotation center for the hinge hood arm may be made equal to or greater than 2.

In this case, by making the ratio of the lateral distance between the base plate and the fitting portion for fitting the hood hinge arm to the hood to the vertical distance between the origin portion and the rotation center for the hinge hood arm equal to or greater than 2, the hood can be greatly deformed downwards due to a slight lateral change in angle of a rotation center axis of the hood hinge arm. As a result, the load applied to the impacting object can be lowered with a simple structure.

As a second aspect of the invention, it is possible to mention a vehicular hood hinge structure having a hood hinge arm fitted to a hood, a base plate fitted to a vehicle body, and a link connecting the hinge arm to the base plate, wherein the hood hinge arm is rotatably pivoted on the link, wherein the link is provided with an origin portion where the link is deformed laterally with respect to a vehicle by a predetermined load applied from the hood, and wherein the hood hinge structure has engagement means that disengages the link from the base plate if the amount of lateral deformation of the link has become equal to or greater than a predetermined value and that causes the link to rotate at least either forwards or backwards with respect to the vehicle and to fall.

In this structure, in the first half of an impact process, the link is deformed laterally with respect to the vehicle around the origin portion provided on the link, by a predetermined load applied from the hood. If the amount of lateral deformation of the link has become equal to or greater than a predetermined magnitude in the latter half of the impact process, engagement of the link with the base plate by the engagement means is released, and the link rotates at least one of forwards and backwards with respect to the vehicle and falls. That is, the hood can be displaced downwards not only by deformation of the link but also by rotation and descent of the link. As a result, the load that is applied to the impacting object and that is based on deformation strength of the hood hinge can be reduced. An increase in deformation load resulting from contact of the bottom of the hood with the hood hinge can also be restrained. Thus, deformation load can be reduced. Because there is no need to form two or more origin portions for deformation on the link, a decrease in rigidity of the entire hood hinge can be restrained.

A lateral distance between the link and a fitting portion for fitting the hood hinge arm to the hood may be made longer than a vertical distance between the origin portion and the rotation center of the hood hinge arm.

In this case, by making the lateral distance between the link and the fitting portion for fitting the hood hinge arm to the hood longer than the vertical distance between the origin portion and the rotation center of the hood hinge arm, the hood can be greatly deformed downwards due to a slight lateral change in angle of a rotation center axis of the hood hinge arm. As a result, the load applied to the impacting object can be lowered with a simple structure.

The base plate may be reinforced below the origin portion. In this structure, the base plate is surely deformed laterally with respect to the vehicle around the origin portion.

### BRIEF DESCRIPTION OF THE DRAWINGS

Fig. 1 is a perspective view of a vehicular hood hinge structure according to a first embodiment of the invention, viewed from a position diagonally forward and outward of a vehicle.
Fig. 2 is a plan view of the vehicular hood hinge structure according to the first embodiment of the invention.
Fig. 3 is a side view of the vehicular hood hinge structure according to the first embodiment of the invention, with a hood shown in cross-section.
Fig. 4 is a cross-sectional view along a line IV-IV shown in Fig. 2.
Fig. 5 is an explanatory view of operation of the vehicular hood hinge structure according to the first embodiment of the invention.
Fig. 6 is a perspective view of a front portion of a vehicle to which the vehicular hood hinge structure according to the first embodiment of the invention is applied, viewed from a position diagonally forward of the vehicle.
Fig. 7 is a graph showing a load characteristic curve of the vehicular hood hinge structure.
Fig. 8A is a side view of a vehicular hood hinge structure according to a modification of the first embodiment of the invention.
Fig. 8B is a side view of a vehicular hood hinge structure according to another modification of the first embodiment of the invention.
Fig. 9 is a perspective view of a vehicular hood hinge structure according to a second embodiment of the invention, viewed from a position diagonally forward and outward of a vehicle.
Fig. 10 is a side view of the vehicular hood hinge structure according to the second embodiment of the invention.
Fig. 11 is a cross-sectional view of the vehicular hood hinge structure according to the second embodiment of the invention and corresponds to Fig. 4.
Fig. 12 is an explanatory view of operation of the vehicular hood hinge structure according to the second embodiment of the invention.
Fig. 13 is a side view of a known vehicular hood hinge structure.
Fig. 14 is a graph showing a load characteristic curve of a related art known vehicular hood hinge structure.

### DETAILED DESCRIPTION OF PREFERRED EMBODIMENTS

Hereinafter, preferred embodiments of the invention will be described. In the following description of the embodiments, arrows FR, UP and IN in the drawings indicate a forward direction, an upward direction and a laterally inward direction with respect to a vehicle, respectively.

### (First embodiment)

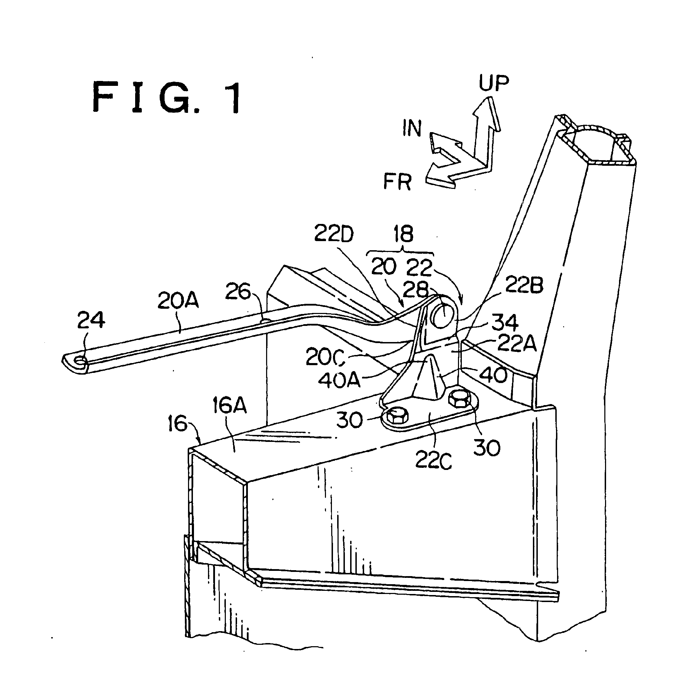

A vehicular hood hinge structure according to a first embodiment of the invention will be described with reference to Figs. 1 to 7.

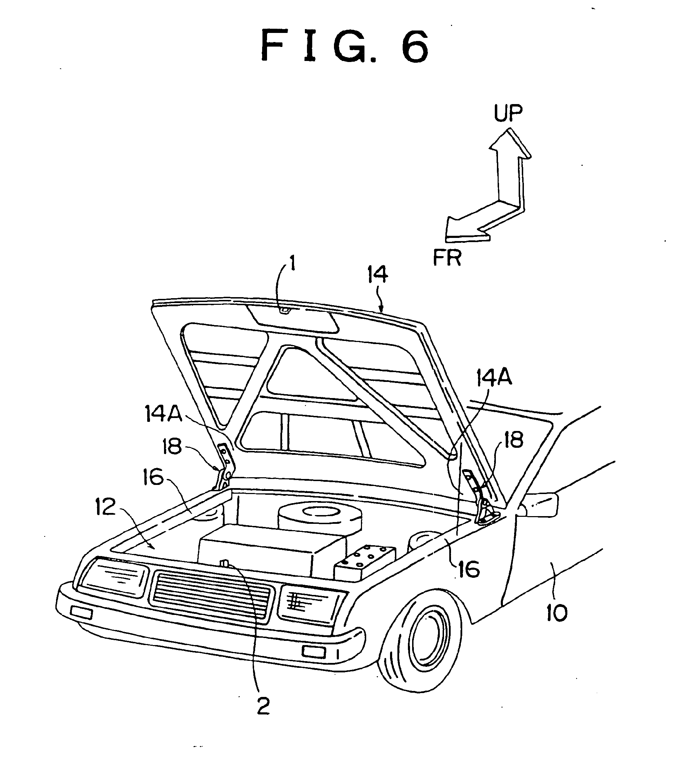

First of all, an overall structure of a front portion of the vehicle will be described. As shown in Fig. 6, a hood 14 covers an engine room 12 that is formed in a vehicle body 10 at its front portion. Laterally near-end portions 14A in a rear end portion of the hood 14 are fitted to left and right apron upper members 16 as skeletal members of the front portion of the vehicle body, via hood hinges 18. A hood striker 1 is provided on a vehicle-front side of the hood 14, and a hood lock 2 is provided on the side of the vehicle body. When the hood 14 is closed, the hood lock 2 engages the hood striker 1. Hood stoppers (not shown) made from rubber or the like are provided in upper portions of the apron upper members 16. When the hood 14 is closed, it is supported by the hood hinges 18, the hood striker 1, the hood lock 2 and the hood stoppers.

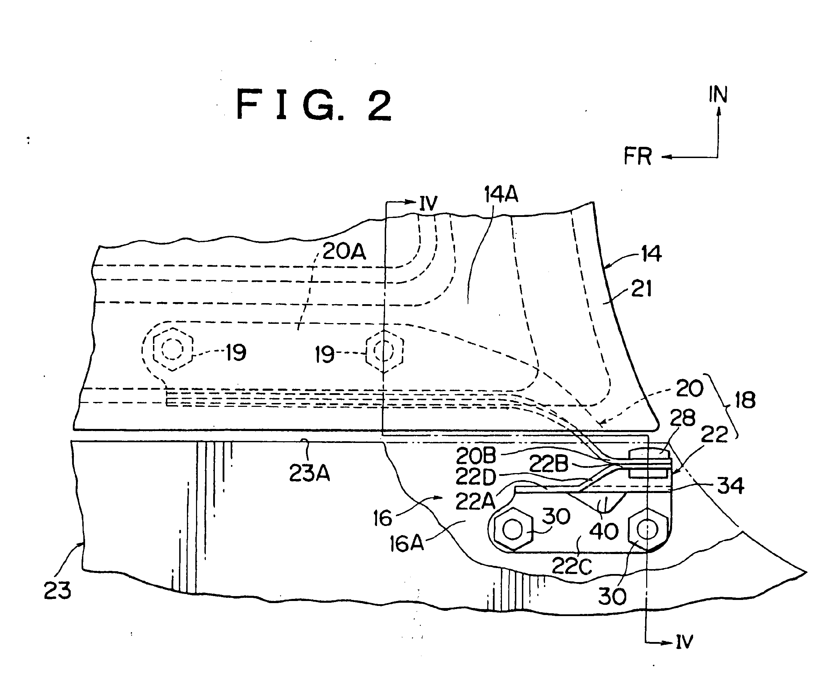

As shown in Figs. 1 and 2, each of the hood hinges 18 has a hood hinge arm 20 and a base plate 22. A hood fitting portion that extends laterally inwards is formed in the hood hinge arm 20 at its front portion. A pair of front and rear fitting holes 24, 26 are formed in the hood fitting portion 20A.

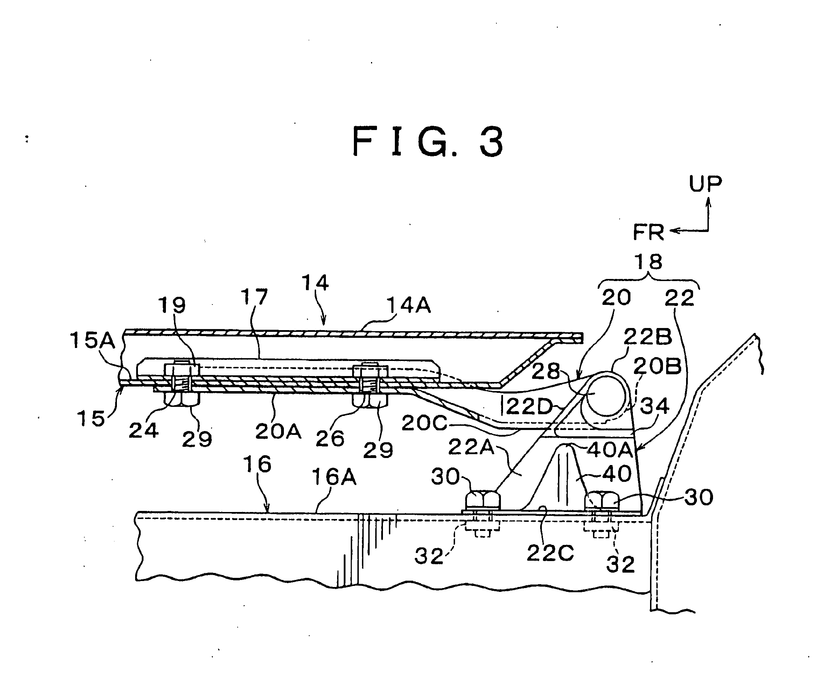

As shown in Fig. 3, a reinforcement 17 is welded to an upper face 15A of an inner panel 15 of the hood 14 longitudinally with respect to the vehicle. The hood 14 is fitted to the hood fitting portion 20A of the hood hinge arm 20 by means of a nut 19 that is fixed to the reinforcement 17 and bolts 29 that are inserted into the fitting holes 24, 26 from below.

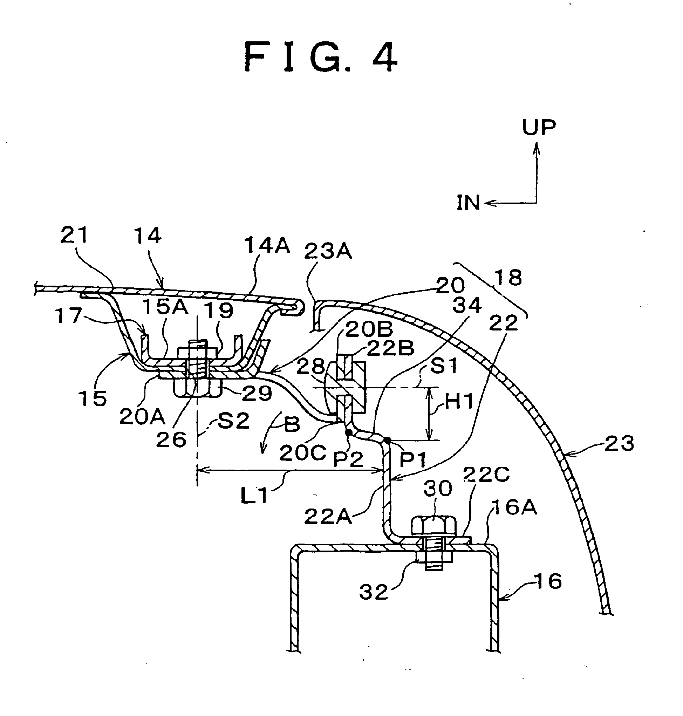

As shown in Fig. 4, the reinforcement 17 has a U-shaped cross-section with an open top and opens toward an outer panel 21 of the hood 14.

As shown in Fig. 3, a rear end portion 20B of the hood hinge arm 20 is vertically rotatably pivoted on an upper end portion 22B of a longitudinal wall portion 22A of the base plate 22 by means of a pin 28, in such a manner that a rotational axis of the hood hinge arm 20 extends laterally with respect to the vehicle.

As shown in Fig. 4, the upper end portion 22B of the longitudinal portion 22A of the base plate 22 is located below a laterally inward end portion 23A of a fender 23.

As shown in Fig. 1, a lower end portion of the longitudinal wall portion 22A of the base plate 22 is a fitting portion 22C that is extended laterally outwards and substantially horizontally. Front and rear end portions of the fitting portion 22C are fixed to an upper wall portion 16A of each of the apron upper members 16 by means of bolts 30 and nuts 32 into which the bolts 30 are screwed (see Fig. 3).

As shown in Fig. 4, a bending or flex portion 34 that is in the shape of a crank when viewed longitudinally with respect to the vehicle is formed in the longitudinal wall portion 22A of the base plate 22 at its vertically middle portion. Therefore, the upper end portion 22B is offset laterally inwards with respect to the longitudinal wall portion 22A. That is, the flex portion 34 flexes laterally inwards at an original portion or a flex point P1 on the outer side (lower side) of the vehicle, and flexes upwards at a flex point P2 on the inner side (upper side) of the vehicle. The flex portion 34 of the base plate 22 is set below or close to a lower face 20C of the hood hinge arm 20 so that the hood hinge arm 20 does not interfere with the base plate 22 when the longitudinal wall portion 22A is deformed laterally inwards.

As shown in Fig. 1, a bead 40 for ensuring surface rigidity is formed in the longitudinal wall portion 22A of the base plate 22 at its longitudinally substantially central portion. The bead 40 swells laterally outwards and is triangular in side and plan views (i.e. rather pyramid-shaped) so that the hood hinge arm 20 does not interfere with the bead 40 when the base plate 22 is deformed at the flex portion 34 laterally inwards. An upper portion 40A of the bead 40 almost reaches a position below the flex portion 34. A flange 22D for ensuring surface rigidity is formed in the longitudinal wall portion 22A of the base plate 22 at its front-side upper portion. Furthermore, the longitudinal wall portion 22A of the base plate 22 is reinforced against longitudinal deformation by being gradually increased in width longitudinally with respect to the vehicle. Operation and effect of this structure will be described later.

As shown in Fig. 4, a lateral distance L1 between a fitting portion S2 for fitting the hood hinge arm 20 to the hood 14 and a lower portion of the longitudinal wall portion 22A of the base plate 22 is longer than a vertical distance H1 between a rotation center S1 of the pin 28 and the flex point P1.

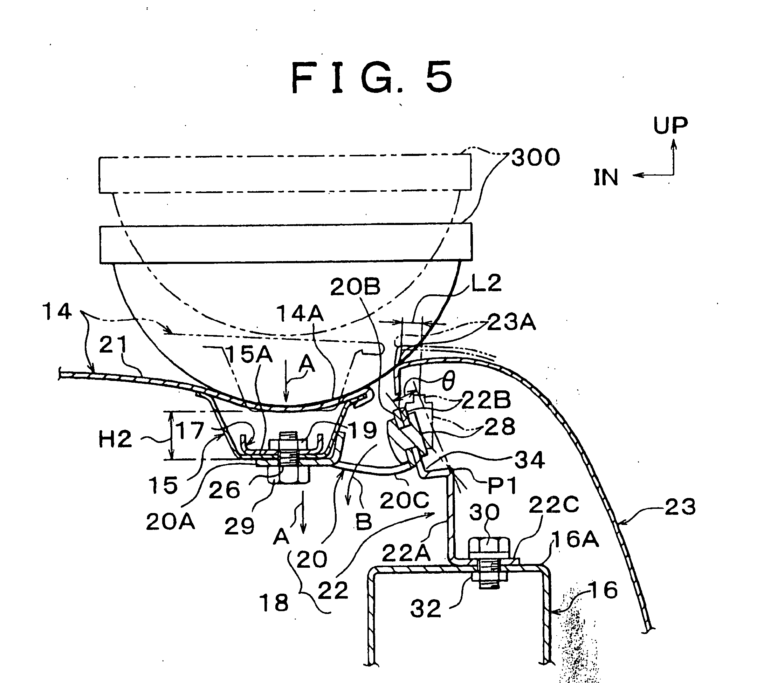

As shown in Fig. 5, if an impacting object 300 has come into abutment on the hood 14 and if the magnitude of the load applied to the hood hinge arm 20 from the hood 14 has become equal to or greater than a predetermined value, the hood fitting portion 20A of the hood hinge arm 20 makes a downward stroke (as indicated by an arrow A shown in Fig. 5). As described above, since the distance L1 is longer than the distance H1, the longitudinal wall portion 22A of the base plate 22 is likely to be deformed laterally inwards (as indicated by an arrow B shown in Fig. 4) around the flex point P1. The flange 22D shown in Figs. 1, 2 and 3 restrains deformation around the flex point P2.

Next, operation of the first embodiment will be described.

In the first embodiment, if the impacting object 300 has come into abutment on the hood 14 at a portion that faces a front portion of the hood hinge 18 during a running state or the like of the vehicle as indicated by a solid line shown in Fig. 5 and if the magnitude of a load applied to the hood hinges 18 from the hood 14 has become equal to or greater than a predetermined value, the hood 14 is deformed from a state indicated by an alternate long and two-dot chain line to a state indicated by the solid line. Therefore, the hood fitting portion 20A of the hood hinge arm 20 of the hood hinge 18 makes a downward stroke (as indicated by the arrow A shown in Fig. 5). Thus, the longitudinal wall portion 22A of the base plate 22 is deformed laterally inwards (as indicated by an arrow B shown in Fig. 5) around the flex point P1. Thus, the base plate 22 is deformed laterally with respect to the vehicle, whereby the hood 14 is likely to be deformed laterally with respect to the vehicle.

The hood 14 is relatively unlikely to be deformed longitudinally with respect to the vehicle by a reinforcing member such as the reinforcement 17. Because the apron upper members are disposed immediately below the hood 14, the hood is also relatively unlikely to be deformed vertically with respect to the vehicle. Thus, in comparison with the case where the hood 14 is deformed longitudinally or vertically with respect to the vehicle, in the case where the hood 14, which is less strongly reinforced laterally with respect to the vehicle, is deformed laterally with respect to the vehicle as in the invention, the amount of deformation of the hood 14 is increased and the peak of a load applied to the impacting object 300 can be reduced.

In the first embodiment, there is no need to provide two or more flex points P1 around which the base plate 22 is deformed. Therefore, even in the case of an increased amount of deformation of the base plate 22, a decrease in rigidity of the entire hood hinge 18 can be restrained.

In the first embodiment, if the impacting object 300 depresses the hood 14 and the hood 14 is displaced downwards by a distance H2, the portion of the hood hinge arm 20 pivoted on the base plate 22 (the portion fitted with the pin 28) is displaced laterally by a distance L2 by rotating by an angle θ in the direction of the arrow B. Thus, by providing the base plate 22 with the flex point P1 so that most of the load transmitted to the base plate 22 concentrates at the flex point P1 and by tilting the base plate by the angle θ, the hood 14 can be greatly displaced downwards and deformed. As a result, the load applied to the impacting object 300 can be lowered.

The longitudinal wall portion 22A gradually increases in width longitudinally with respect to the vehicle below the flex portion 34 of the longitudinal wall portion 22, whereby the longitudinal wall portion 22A is reinforced against longitudinal deformation. Therefore, the base plate 22 is likely to be deformed around the flex point P1 of the flex portion 34 in such a manner that the upper end portion 22B of the longitudinal wall portion 22A is deformed in the lateral direction with respect to the vehicle. Furthermore, the bead 40 provided below the flex portion 34 of the longitudinal wall portion 22A also makes it easy for the base plate 22 to be deformed around the flex point P1 of the flex portion 34 in such a manner that the upper end portion 22B of the longitudinal wall portion 22A is displaced laterally with respect to the vehicle.

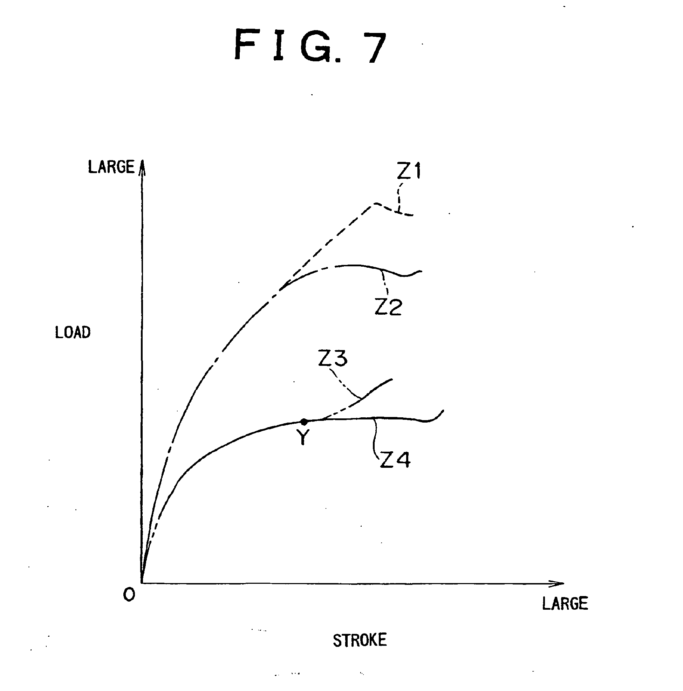

A one-dot chain line shown in Fig. 7 indicates a load characteristic curve Z2 of an impacting object in the case where the base plate 22 is provided with the flex point P1 (as in the construction of the first embodiment) and where L1/H1=1.7. On the other hand, a dotted line shown in Fig. 7 indicates a load characteristic curve Z1 in the case where the base plate 22 is not provided with the flex point P1. As shown in Fig. 7, the load characteristic curve Z2 demonstrates that the effect of reducing the load that is applied to the impacting object when the hood 14 makes an increased stroke is improved in comparison with the load characteristic curve Z1. An alternate long and two-dot chain line shown in Fig. 7 indicates a load characteristic curve Z3 of the impacting object in the case where the base plate 22 is provided with the flex point P1 and where L1/H1=2. The load characteristic curve Z3 demonstrates that the effect of reducing a load applied to the impacting object since the time when the amount of displacement of the hood 14 is not great is improved. Thus, judging from these two examples (the case of L1/H1=1.7 and the case of L1/H1=2), it is considered that the effect of reducing the load applied to the impacting object is improved in proportion to an increase in L1/H1.

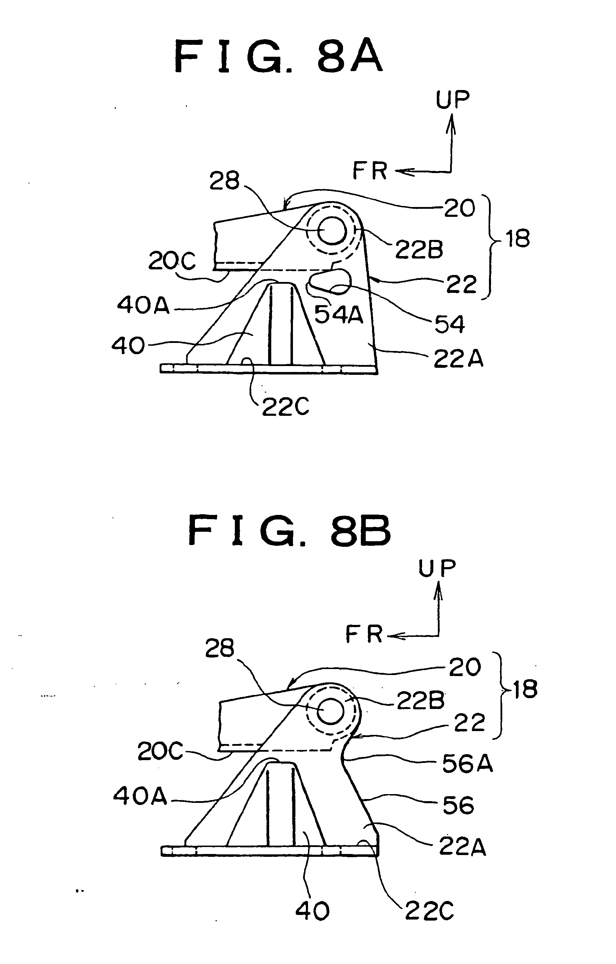

In the first embodiment, the flex portion 34 is formed in the longitudinal wall portion 22A of the base plate 22 at its vertically middle portion, and the upper portion of the longitudinal wall portion 22A of the base plate 22 is deformed around the flex point P1 of the flex portion 34 (as indicated by the arrow B shown in Fig. 4). Instead, however, as shown in Fig. 8A, a longitudinally elongated hole 54 may be formed in the longitudinal wall portion 22A of the base plate 22 at its vertically middle portion. In this case, by providing the base plate 22 with a region having the hole 54 (fragile region), the base plate 22 is deformed in such a manner that the upper end portion 22B of the longitudinal wall portion 22A is displaced laterally inwards around the region. In this case, a vertically central portion 54A of the hole 54 is preferably set below or close to the lower face 20C of the hood hinge arm 20 so that the deformed longitudinal wall portion 22A does not interfere with the hood hinge arm 20. As shown in Fig. 8B, a triangular recess 56 may be formed in the longitudinal wall portion 22A of the base plate 22 at its vertically middle portion, on a side thereof facing the rear of the vehicle. By providing the base plate 22 with a region having the recess 56 (fragile region), the base plate 22 is deformed in such a manner that the upper end portion 22B of the longitudinal wall portion 22A is displaced laterally inwards around the region. In this case, a top portion 56A of the recess 56 is preferably set below or close to the lower face 20C of the hood hinge arm 20 so that the deformed longitudinal wall portion 22A does not interfere with the hood hinge arm 20.

### (Second embodiment)

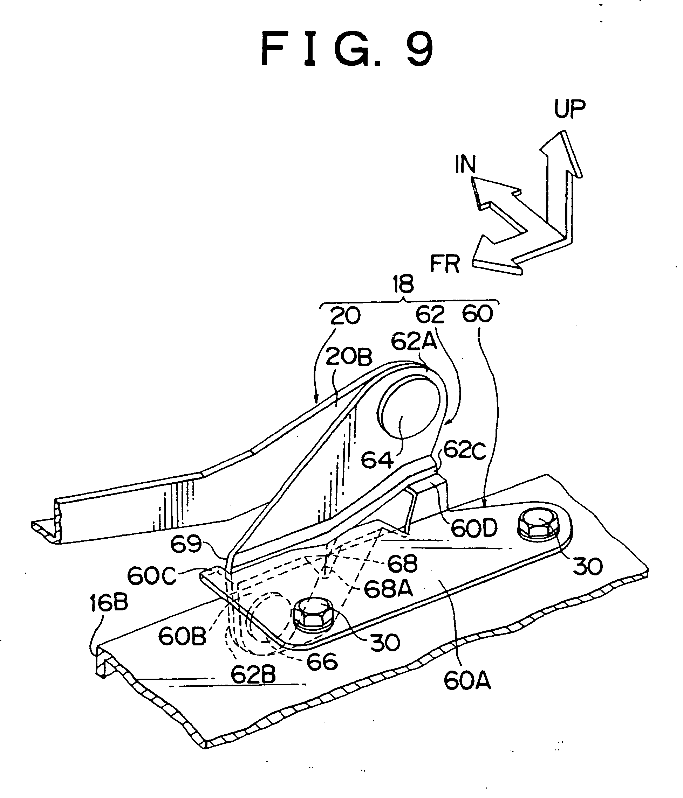

Next, a vehicular hood hinge structure according to a second embodiment of the invention will be described with reference to Figs. 9 to 12.

Members identical with those of the first embodiment are denoted by the same reference numerals, and the description thereof will be omitted.

As shown in Fig. 9, in the second embodiment, the hood hinge 18 has the hood hinge arm 20, a base plate 60, and a link 62.

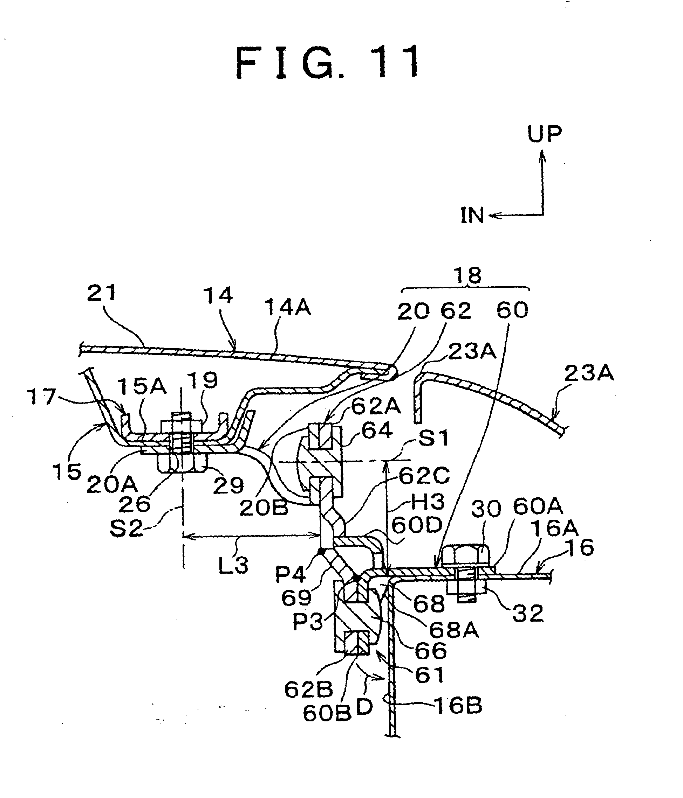

The hood hinge arm 20 is disposed such that its rotational axis extends laterally with respect to the vehicle. The rear end portion 20B of the hood hinge arm 20 is vertically rotatably pivoted on a rear end upper portion 62A of the link 62 by means of a pin 64. As shown in Fig. 11, the rear end upper portion 62A of the link 62 is located below the laterally near-end portions 14A of the hood 14.

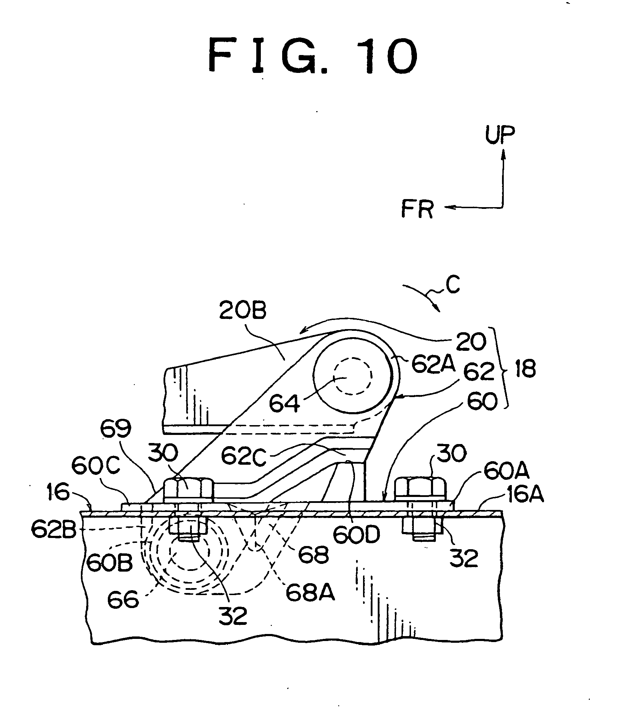

As shown in Fig. 10, a fitting portion 60A of the base plate 60 is extended substantially horizontally and longitudinally with respect to the vehicle. Front and rear end portions of the fitting portion 60A are fixed to the upper wall portion 16A of each of the apron upper members 16 by means of the bolts 30 and the nuts 32 into which the bolts 30 are screwed.

As shown in Fig. 9, a laterally inward end portion of a front portion of the fitting portion 60A of the base plate 60 is extended downwards and constitutes a longitudinal wall portion 60B. A front-end lower portion 62B of the link 62 is vertically rotatably pivoted on a lower end portion of the longitudinal wall portion 60B by means of a pin 66. A bead 68 swelling laterally outwards is formed in the longitudinal wall portion 60B at its longitudinally central portion. The bead 68 is triangular in plan and side views. As shown in Fig. 11, a laterally outward end portion 68A of the bead 68 abuts on a laterally inward side face 16B of each of the apron upper members 16. A gap 61 is formed between the longitudinal wall portion 60B of the base plate 60 and the laterally inward side face 16B of each of the apron upper members 16. Therefore, the longitudinal wall portion 60B of the base plate 60 can be deformed laterally outwards (as indicated by an arrow D shown in Fig. 11).

As shown in Fig. 9, a claw portion 60C that protrudes laterally inwards is formed in the fitting portion 60A of the base plate 60 at its front end portion. Because the front-end lower portion 62B of the link 62 abuts on the claw portion 60C from behind the vehicle, the link 62 is prevented from rotating forwards around the pin 66.

As shown in Figs. 9 and 11, a stopper portion 60D designed as engaging means that protrudes upwards is formed in the fitting portion 60A of the base plate 60 at its rear end portion. A claw portion 62C that is designed as engaging means and that is extended laterally outwards and bent downwards is formed protrusively in a rear portion of the link 62. The claw portion 62C abuts on and engages an upper face of a laterally inward end portion of the stopper portion 60D.

A flex portion 69 that is generally in the shape of a crank when viewed in the longitudinal direction with respect to the vehicle is formed in the link 62 at its vertically middle portion. Thus, an upper portion of the link 62 is offset laterally inwards with respect to a lower portion of the link 62. That is, the flex portion 69 flexes laterally inwards at an origin or a flex point P3 on the outer side (lower side) of the vehicle, and flexes upwards at a flex point P4 on the inner side (upper side) of the vehicle. A lateral distance L3 between the fitting portion S2 for fitting the hood hinge arm 20 to the hood 14 and the link 62 is longer than a vertical distance H3 between a rotation center S1 of the pin 64 and the flex point P3.

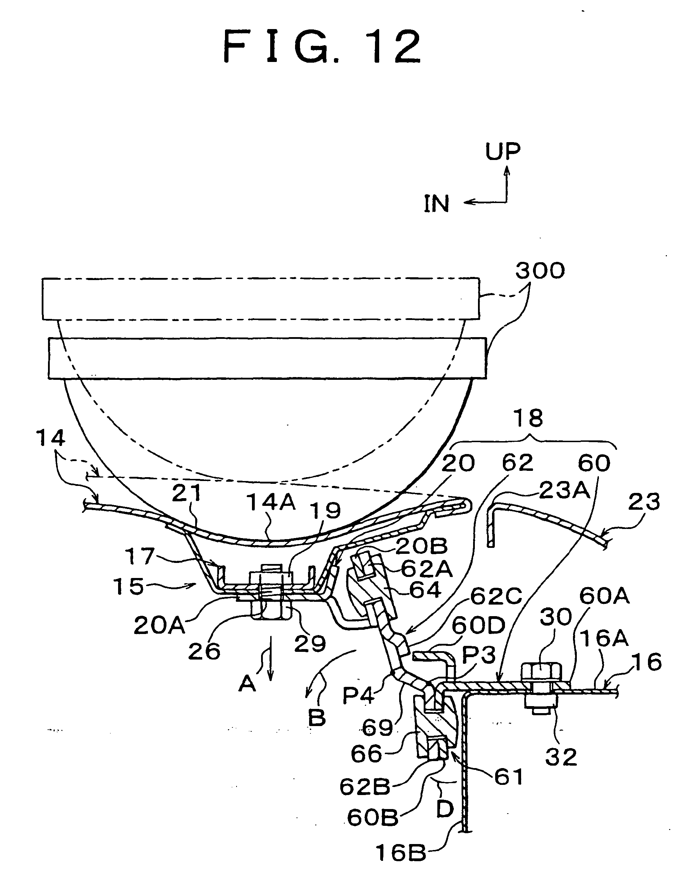

Next, operation of the second embodiment will be described. In the second embodiment, if the impacting object 300 has come into abutment on the hood 14 at a portion that faces the front portion of the hood hinge 18 during a running state or the like of the vehicle as indicated by a solid line shown in Fig. 12 and if the magnitude of the load applied to the hood hinge 18 from the hood 14 has become equal to or greater than a predetermined value, the hood 14 is deformed from a state indicated by a two-dot chain line to a state indicated by a solid line in the first half of an impact process. Thus, the hood fitting portion 20A of the hood hinge arm 20 of the hood hinge 18 makes a downward stroke (as indicated by an arrow A shown in Fig. 12). Therefore, the link 62 is deformed laterally inwards (as indicated by an arrow B shown in Fig. 12) around the flex point P3. At this moment, the longitudinal wall portion 60B of the base plate 60 is deformed laterally outwards (as indicated by an arrow D shown in Fig. 12).

In the second embodiment, if the link 62 is deformed laterally inwards by a predetermined amount or more, the claw portion 62C of the link 62 is disengaged from the stopper portion 60D in a period of transition from the first half to the second half of the impact process.

Thus, in the second half of the impact process, the link 62 not only is deformed laterally inwards (as indicated by the arrow B shown in Fig. 12) but also rotates backwards (as indicated by an arrow C shown in Fig. 10) around the pin 66 and falls. The hood 14 itself is supported by one of the hood hinges 18 that is opposite the other hood hinge 18 in which the claw portion 62C has been disengaged from the stopper portion 60D, the hood striker 1, the hood lock 2, and the hood stoppers for the apron upper members 16. Therefore, if the claw portion 62C is disengaged from the stopper portion 60D, the link 62 falls rotationally, and the hood 14 is deformed due to a load from the impacting object 300 while absorbing impact energy. Thus, the distance to be covered by the hood 14 before its bottom touches the hood hinges 18 and the apron upper members 16 becomes longer, and the amount of deformation of the hood 14 is increased. The load applied to the impacting object 300 is reduced by an amount corresponding to the increase in deformation amount of the hood 14.

As a result, the load that is applied to the impacting object 300 and that is based on deformation strength of the hood hinges 18 can be reduced. An increase in deformation load resulting from contact of the bottom of the hood with the hood hinges 18 can also be restrained. A solid line shown in Fig. 7 indicates a load characteristic curve Z4 of an impacting object in the second embodiment (in the case of L3/H3=1.4). As indicated by the solid line shown in Fig. 7, the load characteristic curve Z4 demonstrates that the effect of reducing a load that is applied to the impacting object when the hood 14 makes an increased stroke is improved in comparison with the load characteristic curve Z3. If the link 62 is not designed to fall rotationally, it is considered that load gradually increases substantially beyond a point Y where the bottom of the hood 14 touches the hood hinges 18, as indicated by the load characteristic curve Z3 (the first embodiment). However, in the second embodiment, the link 62 is disengaged from the base plate 60 in the vicinity of the point Y and then falls rotationally. Thus, the distance to be covered by the hood 14 before its bottom touches the hood hinges 18 and the apron upper members 16 becomes longer. Meanwhile, impact energy is absorbed due to deformation of the hood 14. For this reason, it is considered that a rise in load is restrained even beyond the point Y as indicated by the load characteristic curve Z4.

Judging from the load characteristic curves Z3, Z4 shown in Fig. 7, it is apparent that the lateral distance L3 between the link 62 and the fitting portion S2 for fitting the hood hinge arm 20 to the hood 14 in the second embodiment can be made shorter than the lateral distance L1 between the lower portion of the longitudinal wall portion 22A of the base plate 22 and the fitting portion S2 for fitting the hood hinge arm 20 to the hood 14 in the first embodiment. Therefore, in the second embodiment, rigidity of the entire hood hinge 18 can be improved in comparison with the first embodiment.

In the second embodiment, there is no need to provide two or more flex points P3 around which the link 62 is deformed. Therefore, even in the case of an increased amount of deformation of the link 62, a decrease in rigidity of the entire hood hinge 18 can be restrained.

In the second embodiment, if the impacting object 300 depresses the hood 14 and the hood 14 is displaced downwards as in the first embodiment, the portion of the link 62 fitted with the pin 64 angularly changes laterally inwards (as indicated by the arrow B). Thus, by providing the link 62 with the flex point P3 so that strain concentrates at the flex point P3, the above-mentioned angular change can be easily generated and the hood 14 can be greatly deformed downwards. As a result, the load applied to the impacting object 300 can be lowered.

As in the first and second embodiments, due to a construction in which the rotational center of the hood is displaced laterally (i.e., in left-and-right directions with respect to the vehicle) by a predetermined load that is applied to the hood substantially from above, the hood is likely to be deformed laterally. Thus, by laterally deforming the hood, which is relatively likely to be deformed laterally, the load applied to the impacting object can be reduced. Thus, in the above first and second embodiments, the amount of deformation of the hood can be increased and the peak of the load applied to the impacting object can be reduced.

As described hereinbefore, in the above first and second embodiments, the base plate 22 or the link 62 is deformed laterally inwards. However, the base plate 22 or the link 62 may be deformed laterally outwards. Further, in the above second embodiment, if the link 62 is deformed laterally by a predetermined amount or more, the link 62 is disengaged from the base plate 60 and then falls rotationally and backwards with respect to the vehicle. Instead, however, the link 62 may be designed to fall rotationally and forwards with respect to the vehicle.

In the first embodiment and the second embodiment, the hood hinge structures doesn't require the obstacle detecting means and the actuator as described in Fig. 13, and can hold the rotation center of the hood at the determined position or in the determined orbit when the hood is normally opened and closed. As a result, the embodiments are simple and compact in structures, and are advantageous in that the rotation center of the hood aren't likely to be displaced.

Although the invention has been described hereinbefore in detail as to specific embodiments thereof, it is obvious to those skilled in the art that the invention is not limited to those embodiments and that other various embodiments are possible within the scope of the claims. For example, it is possible that one of the embodiments is combined with the hood hinge structure requiring the obstacle detecting means and the actuator.

## Claims

1. A vehicular hood hinge structure having hood hinge (18; 20, 22; 20, 62, 60)) for rotating a hood (14), **characterized by** comprising:
a mechanism where a rotation center (S1) of the hood hinge for the hood (14) is displaced laterally with respect to a vehicle by a predetermined load applied substantially from above the hood (14).

2. A vehicular hood hinge structure according to claim 1, comprising a hood hinge arm (20) fitted to said hood (14) and a base plate (22) fitted to a vehicle body, wherein
the hood hinge arm (20) is rotatably pivoted on the base plate (22), wherein the base plate (22) is provided with an origin portion (P1) where the rotation center (S1) of the hood (14) is laterally displaceable.

3. The vehicular hood hinge structure according to claim 2, wherein
a lateral distance (L1) between the base plate (22) and a fitting portion (S2) for fitting the hood hinge arm (20) to the hood (14) is greater than a vertical distance (H1) between the origin portion (P1) and the rotation center (S1) for the hood hinge arm (22).

4. The vehicular hood hinge structure according to claim 3, wherein the ratio of the lateral distance (L1) between the base plate (22) and the fitting portion (S2) for fitting the hood hinge arm (20) to the hood (14) to the vertical distance (H1) between the origin portion (P1) and the rotation center (S1) for the hood hinge arm (20) is equal to or greater than 2.

5. A vehicular hood hinge structure according to claim 1 comprising a hood hinge arm (20) fitted to said hood (14), a base plate (60) fitted to a vehicle body, and a link (62) connecting the hood hinge arm (20) to the base plate (60), wherein the hood hinge arm (20) is rotatably pivoted on the link (62), wherein
the link (62) is provided with an origin portion (P3) where the link (62) is laterally deformeable with respect to the vehicle by a predetermined load applied from the hood (14); and wherein
the hood hinge structure has engagement means (60D, 62C) that disengages the link (62) from the base plate (60) if the amount of lateral deformation of the link
(62) has become equal to or greater than a predetermined value and that causes the link (62) to rotate at least either forwards or backwards with respect to the vehicle and to fall.

6. The vehicular hood hinge structure according to claim 5, wherein a lateral distance (L3) between the link (62) and a fitting portion (S2) for fitting the hood hinge arm (20) to the hood (14) is greater than a vertical distance (H3) between the origin portion (P3) and the rotation center (S1) for the hood hinge arm (20).

7. The vehicular hood hinge structure according to any one of claims 2 to 6, wherein the base plate (22; 60) is reinforced below the origin portion (P1; P3).

## Patentansprüche

1. Fahrzeughaubenscharnieraufbau mit einem Haubenscharnier (18; 20, 22; 20, 62, 60) zum Drehen einer Haube (14), **gekennzeichnet durch**:
einen Mechanismus, bei dem eine Drehmitte (S1) des Haubenscharniers für die Haube (14) **durch** eine vorbestimmte Last, die im Wesentlichen von oben auf die Haube (14) aufgebracht wird, in Bezug auf ein Fahrzeug seitlich verschoben wird.

2. Fahrzeughaubenscharnieraufbau gemäß Anspruch 1, der des Weiteren einen Haubenscharnierarm (20), der an der Haube (14) befestigt ist, und eine Basisplatte (22) besitzt, die an einem Fahrzeugkörper befestigt ist, wobei
der Haubenscharnierarm (20) drehbar an der Basisplatte (22) anscharniert ist, wobei die Basisplatte (22) mit einem Ursprungsabschnitt (P1) versehen ist, an dem die Drehmitte (S1) der Haube (14) seitlich verschiebbar ist.

3. Fahrzeughaubenscharnieraufbau gemäß Anspruch 2, wobei ein seitlicher Abstand (L1) zwischen der Basisplatte (22) und einem Befestigungsabschnitt (S2) zum Befestigen des Haubenscharnierarms (20) an der Haube (14) größer als ein vertikaler Abstand (H1) zwischen dem Ursprungsabschnitt (P1) und der Drehmitte (S1) für den Haubenscharnierarm (22) ist.

4. Fahrzeughaubenscharnieraufbau gemäß Anspruch 3, wobei das Verhältnis des seitlichen Abstands (L1) zwischen der Basisplatte (22) und dem Befestigungsabschnitt (S2) zum Befestigen des Haubenscharnierarms (20) an der Haube (14) zu dem vertikalen Abstand (H1) zwischen dem Ursprungsabschnitt (P1) und der Drehmitte (S1) des Haubenscharnierarms (20) gleich wie oder größer als 2 ist.

5. Fahrzeughaubenscharnieraufbau gemäß Anspruch 1, der des Weiteren einen Haubenscharnierarm (20), der an der Haube (14) befestigt ist, eine Basisplatte (60), die an einem Fahrzeugkörper montiert ist, und ein Verbindungsteil (62) besitzt, das den Haubenscharnierarm (20) mit der Basisplatte (60) verbindet, wobei der Haubenscharnierarm (20) an dem Verbindungsteil (62) drehbar angelenkt ist, wobei
das Verbindungsteil (62) mit einem Ursprungsabschnitt (P3) versehen ist, an dem das Verbindungsteil (62) durch eine vorbestimmte Last, die von der Haube (14) aufgebracht wird, in Bezug auf das Fahrzeug seitlich verformbar ist; und wobei
der Haubenscharnieraufbau eine Eingriffseinrichtung (60D, 62C) besitzt, die das Verbindungsteil (62) von der Basisplatte (60) außer Eingriff bringt, wenn der Betrag der seitlichen Verformung des Verbindungsteils (62) gleich wie oder größer als ein vorbestimmter Wert geworden ist, und die veranlasst, dass sich das Verbindungsteil (62) zumindest entweder nach vorn oder nach hinten in Bezug auf das Fahrzeug dreht und sich absenkt.

6. Fahrzeughaubenscharnieraufbau gemäß Anspruch 5, wobei ein seitlicher Abstand (L3) zwischen dem Verbindungsteil (62) und einem Befestigungsabschnitt (S2) zum Befestigen des Haubenscharnierarms (20) an der Haube (14) größer als ein vertikaler Abstand (H3) zwischen dem Ursprungsabschnitt (P3) und der Drehmitte (S1) des Haubenscharnierarms (20) ist.

7. Fahrzeughaubenscharnieraufbau gemäß einem der Ansprüche 2 bis 6, wobei die Basisplatte (22; 60) unterhalb des Ursprungsabschnitts (P1; P3) verstärkt ist.

## Revendications

1. Structure de charnière pour capot de véhicule ayant une charnière pour capot (18 ; 20, 22 ; 20, 62, 60) pour faire pivoter un capot (14), **caractérisée en ce qu'**elle comprend :
un mécanisme dans lequel un centre de rotation (S1) de la charnière de capot pour le capot (14) est déplacée latéralement par rapport à un véhicule par une charge prédéterminée appliquée substantiellement depuis le dessus du capot (14).

2. Structure de charnière pour capot de véhicule selon la revendication 1, comprenant un bras de charnière pour capot (20) fixé audit capot (14) et une plaque de base (22) fixée à une carrosserie de véhicule, dans laquelle
le bras de charnière pour capot (20) est fait pivoter de manière rotative sur la plaque de base (22), dans laquelle la plaque de base (22) est pourvue d'une portion d'origine (P1) où le centre de rotation (S1) du capot (14) est latéralement déplaçable.

3. Structure de charnière pour capot de véhicule selon la revendication 2, dans laquelle
une distance latérale (L1) entre la plaque de base (22) et une portion de fixation (S2) pour fixer le bras de charnière pour capot (20) au capot (14) est plus grande qu'une distance verticale (H1) entre la portion d'origine (P1) et le centre de rotation (S1) pour le bras de charnière pour capot (22).

4. Structure de charnière pour capot de véhicule selon la revendication 3, dans laquelle le rapport de la distance latérale (L1) entre la plaque de base (22) et la portion de fixation (S2) pour fixer le bras de charnière pour capot (20) au capot (14) par la distance verticale (H1) entre la portion d'origine (P1) et le centre de rotation (S1) pour le bras de charnière pour capot (20) est égale à ou supérieure à 2.

5. Structure de charnière pour capot de véhicule selon la revendication 1 comprenant un bras de charnière pour capot (20) fixé audit capot (14), une plaque de base (60) fixée à une carrosserie de véhicule, et une articulation (62) reliant le bras de charnière pour capot (20) à la plaque de base (60), dans laquelle le bras de charnière pour capot (20) est fait pivoter de manière rotative sur l'articulation (62), dans laquelle
l'articulation (62) est pourvue d'une portion d'origine (P3) où l'articulation (62) est déformable latéralement par rapport au véhicule par une charge prédéterminée appliquée depuis le capot (14); et dans laquelle
la structure de charnière pour capot a un moyen d'engagement (60D, 62C) qui désengage l'articulation (62) de la plaque de base (60) si la quantité d'une déformation latérale de l'articulation (62) est devenue égale à ou supérieure à une valeur prédéterminée et qui amène l'articulation (62) à tourner au moins soit vers l'avant ou vers l'arrière par rapport au véhicule et à tomber.

6. Structure de charnière pour capot de véhicule selon la revendication 5, dans laquelle une distance latérale (L3) entre l'articulation (62) et une portion de fixation (S2) pour fixer le bras de charnière pour capot (20) au capot (14) est plus grande qu'une distance verticale (H3) entre la portion d'origine (P3) et le centre de rotation (S1) pour le bras de charnière pour capot (20).

7. Structure de charnière pour capot de véhicule selon l'une quelconque des revendications 2 à 6, dans laquelle la plaque de base (22 ; 60) est renforcée sous la portion d'origine (P1 ; P3).
